# EUROPEAN PATENT APPLICATION

(11) **EP 2 574 765 A2**
(43) Date of publication of application: **03.04.2013**
(21) Application number: 12185760.1
(22) Date of filing: 24.09.2012
(51) Int. Cl.: F02K 1/72, F02K 1/76

(54) **Variable area fan nozzle with locking assembly**

(30) Priority: 28.09.2011 US 201161540322 P; 21.03.2012 US 201213426275
(71) Applicant: Honeywell International Inc., Morristown, NJ 07962-2245 (US)
(72) Inventor: Vaughn, Ron, Morristown, NJ New Jersey 07962-2245 (US); Chakkera, Kevin K., Morristown, NJ New Jersey 07962-2245 (US)
(74) Representative: Houghton, Mark Phillip

(57) **Abstract**

A nozzle locking assembly is provided for an aircraft with a thrust reverser actuation system (TRAS) having a transcowl and a variable area fan nozzle (VAFN) system having a nozzle. The nozzle locking assembly includes a rod coupled to a fixed structure of the aircraft; and a locking mechanism mounted on the transcowl and configured to, when the transcowl is in a first position, engage the rod to unlock the nozzle locking assembly and to, when the transcowl is in a second position, disengage from the rod to lock the nozzle locking assembly

## Description

### CROSS-REFERENCE TO RELATED APPLICATION

This application claims the benefit of U.S. Provisional Application No. 61/540,322, filed September 28, 2011, the entirety of which is hereby incorporated by reference.

### TECHNICAL FIELD

The present invention relates to variable area fan nozzle assemblies and more particularly to nozzle locking assemblies for variable area fan nozzle assemblies of jet engines.

### BACKGROUND

Conventional gas turbine engines generally include a fan section and a core engine with one or more compressors, a combustion section, and one or more turbines. The fan section and the core engine are disposed about a longitudinal axis and are enclosed within a case assembly. During operation, the fan section induces a first portion of air into the core engine and a second portion of air into a bypass flow path.

In the core engine, air is compressed, mixed with fuel, combusted, expanded through the turbines, and subsequently discharged from the core engine through an exhaust nozzle system. The bypass air is directed through the bypass flow path, disposed radially outward of the primary airflow path, and discharged through an annular fan exhaust nozzle system defined between a fan case and an inner cowl. A majority of thrust is produced by the pressurized fan air discharged through the fan exhaust nozzle, the remaining thrust being provided from the combustion gases discharged through the core exhaust nozzle.

The engine may include a thrust reverser system and a fan nozzle system to manipulate air flow through the bypass flow path. Thrust reversers function to enhance the braking of the aircraft during landing. When deployed, a thrust reverser redirects the rearward thrust via the bypass flow path of the jet engine to a forward or semi-forward direction to decelerate the aircraft upon landing. When in the stowed position, the thrust reversers are in a position that generally does not redirect the engine thrust.

The nozzle system may be positioned on or adjacent to the transcowls of a thrust reverser system. Some gas turbine engines have implemented variable area fan nozzles. The variable area fan nozzles provide a smaller fan exit nozzle diameter to optimize operation during certain conditions. However, existing variable area fan nozzles typically utilize no safety mechanisms or relatively complex safety mechanisms that undesirably increase overall engine weight and decrease fuel efficiency.

Accordingly, it is desirable to provide improved variable area fan nozzles with improved safety mechanisms. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with an exemplary embodiment, a nozzle locking assembly is provided for an aircraft with a thrust reverser actuation system (TRAS) having a transcowl and a variable area fan nozzle (VAFN) system having a nozzle. The nozzle locking assembly includes a rod coupled to a fixed structure of the aircraft; and a locking mechanism mounted on the transcowl and configured to, when the transcowl is in a first position, engage the rod to unlock the nozzle locking assembly and to, when the transcowl is in a second position, disengage from the rod to lock the nozzle locking assembly.

In accordance with another exemplary embodiment, a case assembly for an aircraft is provided. The cases assembly includes a thrust reverser actuation system (TRAS) having a transcowl, the transcowl having a stowed position and an deployed position; a variable area fan nozzle (VAFN) system having a nozzle selectively coupled to the transcowl; and a nozzle locking assembly locking the nozzle to the transcowl in the deployed position and unlocking the nozzle from the transcowl in the stowed position.

### BRIEF DESCRIPTION OF THE DRAWINGS

The present invention will hereinafter be described in conjunction with the following drawing figures, wherein like numerals denote like elements, and

FIG. 1 is a perspective view of an aircraft engine system according to an exemplary embodiment;

FIG. 2 is a schematic cross-sectional view of the engine system of FIG. 1 according to an exemplary embodiment;

FIG. 3 is a partial, more detailed cross-sectional view of the engine system of FIG. 2 with a transcowl and nozzle in a first position according to an exemplary embodiment;

FIG. 4 is a partial, more detailed cross-sectional view of the engine system of FIG. 2 with a transcowl in a second position according to an exemplary embodiment;

FIG. 5 is a partial, more detailed cross-sectional view of the engine system of FIG. 2 with a nozzle in a second position according to an exemplary embodiment;

FIG. 6 is a simplified functional schematic representation of an actuator system associated with the engine system of FIG. 2 according to an exemplary embodiment;

FIG. 7 is a schematic view of a nozzle lock assembly when the transcowl and nozzle are in the first position in accordance with an exemplary embodiment;

FIG. 8 is a schematic view of the nozzle lock assembly when the nozzle is in the second position in accordance with an exemplary embodiment; and

FIG. 9 is a schematic view of the nozzle lock assembly when the transcowl is in the second position in accordance with an exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

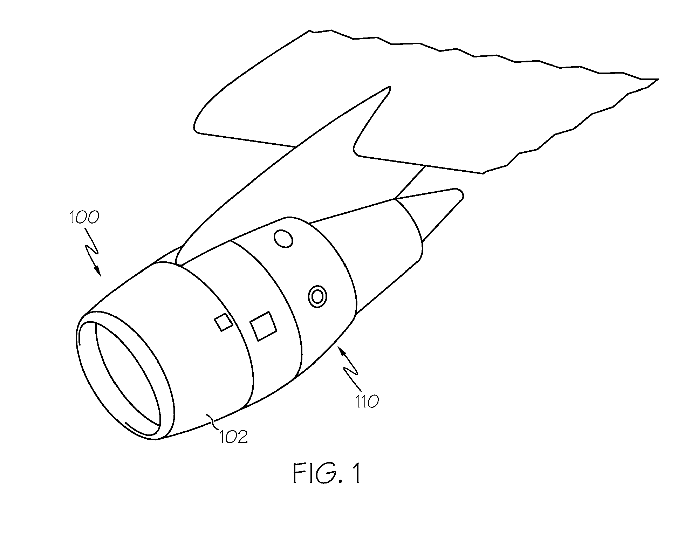

FIG. 1 is a perspective view of portions of an aircraft jet engine system 100 with a fan case 102. Typically, the fan case 102 encloses a turbofan engine, as described below, and mounts the engine for aircraft operation. As also discussed below, the engine system 100 may include a case assembly 110 to optimize operation.

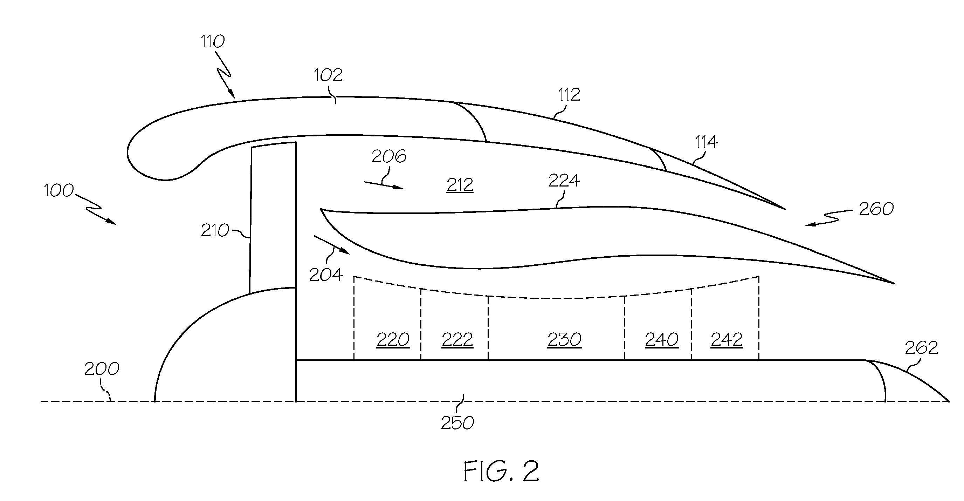

FIG. 2 is a schematic cross-sectional view of the engine system 100 of FIG. 1. The engine system 100 is circumferentially disposed about an engine centerline 200. The engine system 100 includes a fan 210, a low pressure compressor 220, a high pressure compressor 222, a combustion section 230, a high pressure turbine 240, and a low pressure turbine 242 arranged around an engine shaft 250. Typically, air is compressed in the compressors 220, 222, mixed with fuel and burned in the combustion section 230, and expanded in the turbines 240, 242. The turbines 240, 242 include rotors coupled for rotation with the engine shaft to drive the compressors 220, 222 and the fan 210 in response to the expansion of combustion gases.

In the example shown, the engine system 100 is a gas turbine bypass turbofan arrangement in which the diameter of the fan 210 is larger than that of the compressors 220, 222. As such, the case (or nacelle) 102 extends circumferentially about the fan 210 to define a bypass air flow path 212 extending between the case 102 and an inner cowl 224, which generally surrounds the compressors 220, 222, combustion section 230, and turbines 240, 242.

In operation, the fan 210 draws air into the engine system 100 as core flow 204 and into the bypass air flow path 212 as bypass air flow 206. A rear exhaust 260 discharges the bypass air flow 206 from the engine system 100, and the core flow 204 is discharged from a passage between the inner cowl 224 and a tail cone 262 to produce thrust.

As described in greater detail below, the case assembly 110 generally includes a thrust reverser actuation system (TRAS) 112 and a variable area fan nozzle (VAFN) system 114 to manipulate bypass air flow 206 in the flow path 212. In general, the TRAS 112 functions to selectively block the bypass air flow path 212 of the engine to provide braking to the aircraft, e.g., as redirected thrust. The VAFN system 114 functions to selectively adjust the flow area of the bypass air flow path 212 to optimize engine operation.

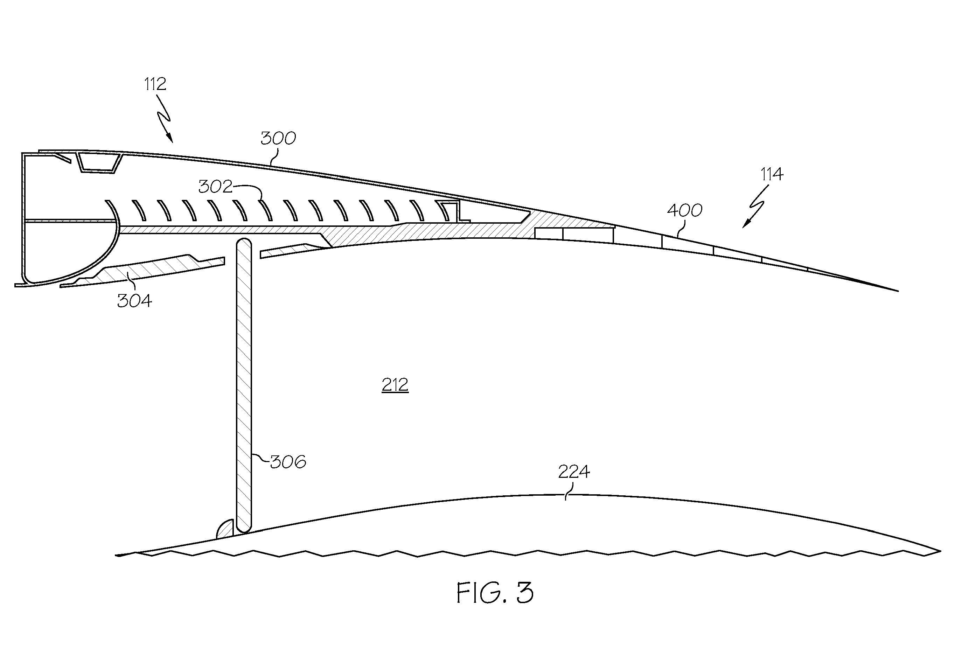

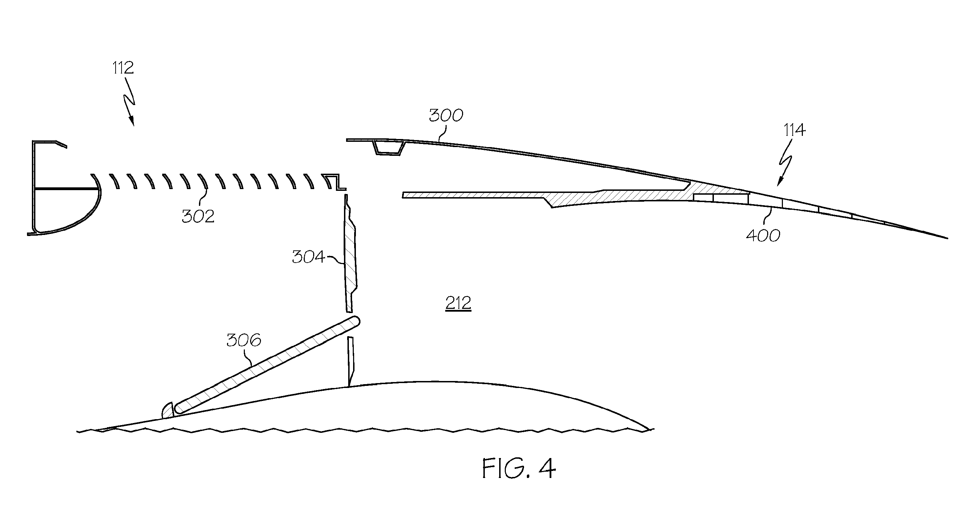

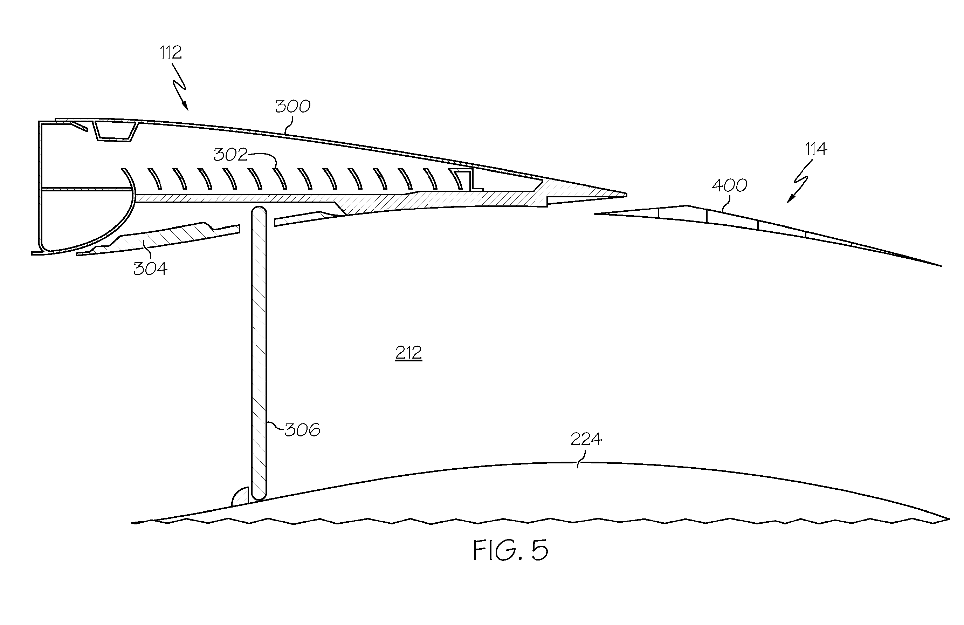

FIGS. 3-5 illustrate the operation of the TRAS 112 and VAFN system 114 relative to the bypass air flow path 212. In particular, FIG. 3 is a partial, more detailed cross-sectional view of the aircraft engine of FIG. 2 with the TRAS 112 and VAFN system 114 in a first position. FIG. 4 is a partial, more detailed cross-sectional view of the aircraft engine of FIG. 2 with the TRAS 112 in a second position, and FIG. 5 is a partial, more detailed cross-sectional view of the aircraft engine of FIG. 2 with the VAFN system 114 in a second position.

As is described in greater detail below, the TRAS 112 includes one or more semi-circular transcowls (or "reverser cowls") 300 that are positioned circumferentially on the outside of the jet engine fan case 102 (FIG. 1), typically on a fixed structure or torque box. In one exemplary embodiment, the TRAS 112 includes a pair of semi-circular transcowls 300 that extend around the case 102. The VAFN system 114 includes trailing edge fan nozzles 400 arranged at the downstream ends of the transcowls 300. Additional details about the operation and deployment of the transcowls 300 and nozzles 400 will be provided below with respect to FIGS. 3-5 prior to a more detailed description of the VAFN system 114.

As shown more particularly in FIG. 3, the transcowls 300 cover a plurality of vanes 302, which may be cascade-type vanes, which are positioned between the transcowls 300 and a bypass air flow path 212. When in the stowed position, as depicted in FIG. 3, the transcowls 300 are pressed against one or more stow seals, which keep air in the bypass air flow path 212. The transcowls 300 are mechanically linked to a series of blocker doors 304 via a drag link 306. In the stowed position, the blocker doors 304 form a portion of an outer wall and are therefore oriented parallel to the bypass air flow path 212.

However, as is shown in FIG. 4, when the TRAS 112 is commanded to deploy, the transcowls 300 are translated aft, causing the blocker doors 304 to rotate into a deployed position, such that the bypass air flow path 212 is blocked. This also causes the vanes 302 to be exposed and the bypass air flow to be redirected out the vanes 302. The redirection of the bypass air flow in a forward direction creates a reverse thrust and thus works to slow the airplane.

Now referring FIG. 5, which depicts the TRAS 112 in the stowed position, the VAFN system 114 may selectively adjust the nozzles 400 mounted on the trailing edges of the transcowls 300 to optimize the engine performance under different flight conditions. The nozzles 400 may be nozzle-like annular airfoil structures selectively translated (i.e., moved fore and aft) to vary the fan nozzle's exit area and to adjust an amount of engine bypass flow. As compared to FIG. 3, the nozzles 400 in FIG. 5 have been translated aft. Any number of nozzles 400 may be provided, although in one exemplary embodiment, two nozzles 400 are provided.

As such, the transcowls 300 and nozzles 400 are selectively translated with one or more actuation systems. In one exemplary embodiment, the nozzles 400 are only operated when the transcowl 300 is in the stowed position. In other words, the nozzles 400 are not operated when the aircraft is landing in this exemplary embodiment. As described in greater detail below, the actuation system of the VAFN system 114 functions to prevent movement of the nozzles 400 when the TRAS 112 is deployed.

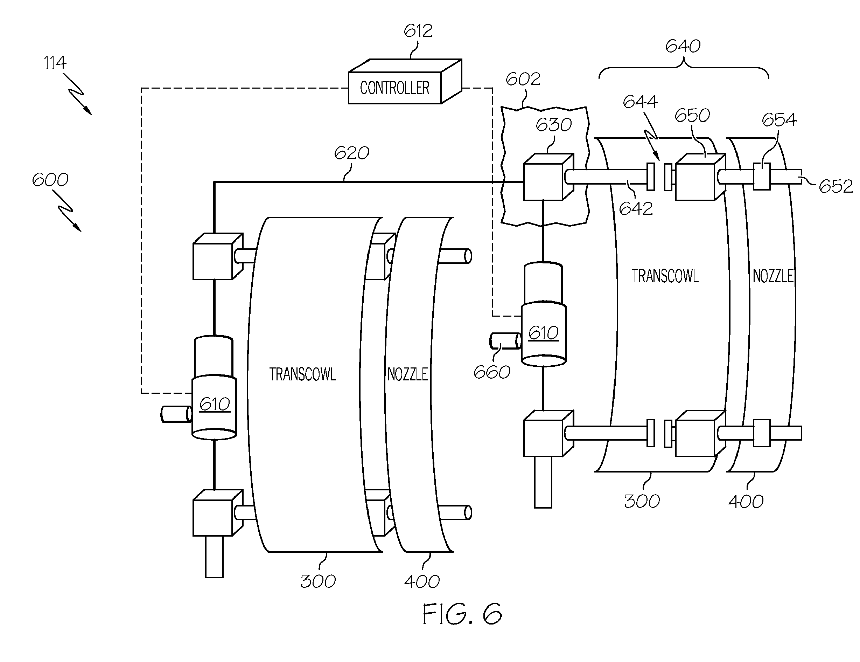

FIG. 6 is a simplified functional schematic representation of an actuation system 600 of the VAFN system 114 according to an exemplary embodiment. The actuation system 600 modulates the variable area fan nozzle effective flow area by moving the vane airfoil position from 0% to 100% of stroke. As noted above, the case assembly 110 (FIG. 1) includes a fixed torque box (not shown) and translating thrust reverser transcowls 300. Referring briefly to the TRAS 112 (FIGS. 3-5), the semi-circular transcowls 300 may operate on sliders on upper and lower beams, and as described below, at least a portion of the VAFN system 114 may be mounted on the transcowls 300.

The actuation system 600 includes one or more power drive units (PDUs) 610. Each PDU 610 is an integrated rotor, brake, and optionally, a gearbox. The motors are coupled to a controller that receives signals from a controller 612, such as a FADEC. Flexible drive shafts 620 drive the gearboxes 630 mounted to the fixed structure (e.g., a stationary torque box 602, partially shown in FIG. 6). The gearboxes 630 may be, for example, bevel set gearboxes.

The torque from the PDUs 610 actuates the nozzles 400 via the drive shafts 620 and gearboxes 630, and this torque may be further transferred with drive coupling assemblies 640. One drive coupling assembly 640 will be described, although more than one drive coupling assembly 640 may be provided. In the exemplary embodiment of FIG. 6, four drive coupling assemblies 640 are depicted such that a first pair of drive coupling assemblies 640 coordinate to drive one of the nozzles 400 and a second pair of drive coupling assemblies 640 coordinate to drive the other nozzle 400. Any suitable arrangement may be provided.

Each drive coupling assembly 640 includes first drive shaft 642, a selectively disengageable drive coupling 644, a nozzle actuator 650, a second drive shaft 652, and gimbal 654. A more detailed description of the drive coupling assembly 640 is provided below after a general description of the operation.

The first drive shaft 642 extends from the fixed structure gearbox 630 and may be selectively rotated at the first structure gearbox 630. The first drive shaft 642 is configured to rotationally engage the second drive shaft 652 at the drive coupling 644, as discussed in greater below. As such, when engaged, the second drive shaft 652 rotates with the first drive shaft 642.

The second drive shaft 652 extends through and is coupled to the nozzle actuator 650, which is mounted on the transcowl 300. As a result of this arrangement, the gearbox 630 and nozzle actuator 650 move relative to one another in a longitudinal direction as the transcowl 300 is stowed and retracted. In other words, the drive coupling 644 engages and disengages the first and second drive shafts 642, 652 based on the position of the transcowl 300. In the view of FIG. 6, the drive coupling 640 is disengaged, thus preventing the first drive shaft 642 from transferring torque to the second drive shaft 652. Although not shown in FIG. 6, the nozzle actuator 650 further includes a brake mechanism to prevent rotation of the second drive shaft 652 when the drive coupling 644 is disengaged.

The nozzle actuator 650 is typically a ballscrew actuator such that the second drive shaft 652 translates forward and aft when rotated. The second drive shaft 652 extends to the gimbal 654, which is mounted on the nozzle 400. As the second drive shaft 652 translates, it also translates the gimbal 654 and thus the nozzle 400. As such, the nozzle 400 is actuated back and forth by the translating drive shaft 652. Accordingly, the torque from the PDUs 610 may be transferred to linear movement of the nozzle 400 when the drive coupling 644 is engaged. Additionally, a manual drive unit 660 mounts to each PDU 610 and mates with gearshaft 620 allowing for manual extension and retraction of the nozzles 400.

Since the nozzle actuator 650 only actuates the nozzle 400 when the drive coupling 644 is engaged, the nozzles 400 may only operate when the thrust reverser transcowls 300 are stowed and locked (e.g., when the transcowls are in a position such that the drive coupling 644 engages). At that time, the drive coupling 644 engages the gearbox on the fixed torque box to the nozzle actuator 650 and simultaneously unlocks the drive coupling assembly 640 to enable fan nozzle operation during takeoff, cruise, and prior to landing and reverser operation. When the aircraft lands and the thrust reverser transcowls 300 are commanded to deploy, the drive coupling 644 disengages and the drive coupling assembly 640 is locked.

Although not shown in FIG. 6, the drive coupling assembly 640 may couple and decouple to drive the VAFN 114 in any suitable manner. For example, in one exemplary embodiment, the drive coupling assembly 640 may have pins and/or tabs on respective ends to rotatably engage one another when engaged. Additionally, in addition to the lock assembly discussed below, the drive coupling assembly 640 may have one or more brakes to prevent movement of the VAFN when disengaged.

Accordingly, in the exemplary embodiment shown in FIG. 6, the actuator system includes: two PDUs (integrated motor, brake & gearbox located at 3 and 9 o'clock); one controller; four gearboxes mounted on fixed structure; four ball screw actuators mounted on transcowl; two nozzle position indicators (RVDT/LVDT); five flexible shafts; one or two Manual Drive Units; Electrical Harnesses; and four drive couplings engaged only when transcowl is stowed. Any suitable arrangement may be provided. For example, in another exemplary embodiment, the actuator system includes: one PDU (integrated motor, brake & gearbox located at 3, 9 or 12 o'clock); one controller; four gearboxes mounted on fixed structure; four ballscrew actuators mounted on transcowl; two nozzle position indicators (RVDT/LVDT); four flexible shafts; one Manual Drive Unit; Electrical Harnesses; and four drive couplings engaged only when transcowl is stowed. The actuators described herein may be electrical, mechanical, pneumatic, hydraulic, or the like, and can be interconnected by appropriate power cables and conduits (not shown).

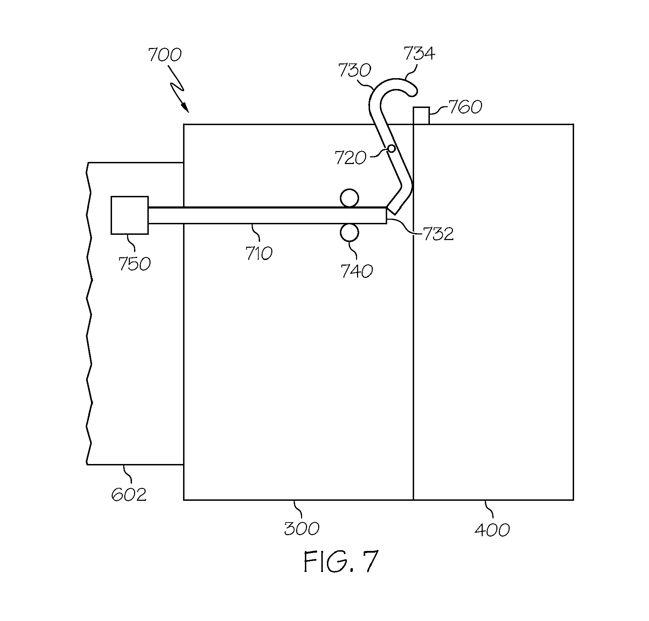

FIGS. 7-9 are schematic view of a nozzle lock assembly 700 that functions to prevent movement of the nozzles 400 relative to the transcowls 300 when the transcowls 300 are stowed. As described below, the nozzle lock assembly 700 is actuated based on the position of the transcowl 300. As such, the nozzle lock assembly 700 is discussed below with respect to various positions of the transcowls 300 and nozzles 400. In FIGS. 7-9, one nozzle lock assembly 700 is shown, although in other embodiments, more than one nozzle lock assembly 700 may be provided..

With initial reference to FIG. 7, the nozzle lock assembly 700 is illustrated with the transcowl 300 and nozzle 400 in the first position. The positions of the transcowl 300 and nozzle 400 of FIG. 7 generally correspond to the positions shown in FIG. 3 in which the transcowl 300 and nozzle 400 are in the stowed position.

The nozzle lock assembly 700 includes a rod 710, a torsion spring 720, a locking mechanism 730, a roller bearing 740, a mount 750, and a catch structure 760. The mount 750 couples the rod 710 to the torque box 602 such that the rod 710 is stationary relative to the torque box 602. The roller bearings 740 couple the rod 710 to the transcowl 300 and may include rollers that enable the transcowl 300 to move relative to the rod 710, as discussed in greater detail below.

In the position shown in FIG. 7, the rod 710 engages the locking mechanism 730 mounted on the transcowl 300. Particularly, the locking mechanism 730 is mounted on the transcowl 300 with the torsion spring 720 that enables the locking mechanism 730 to pivot on the transcowl 300. The locking mechanism 730 may have a first end 732 that engages the rod 710 in unlocked positions and a second end 734 that engages the nozzle 400 in locked positions, particularly the catch structure 760 on the nozzle 400, as also discussed in greater detail below.

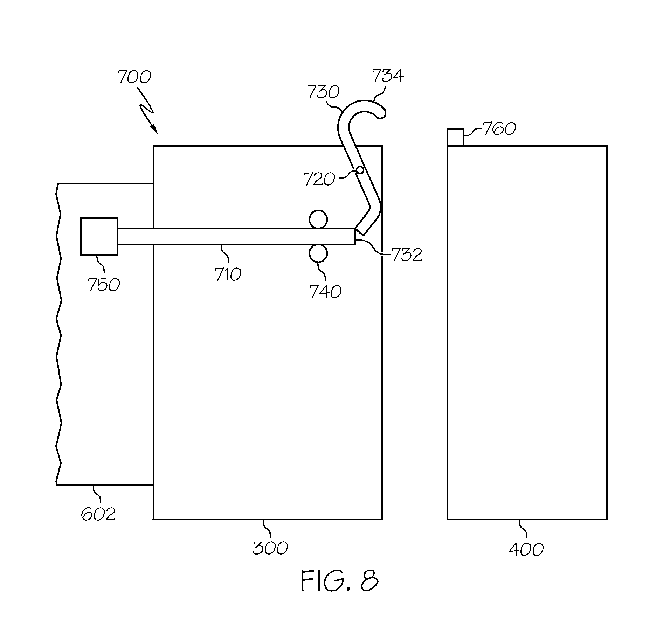

As shown in FIG. 8, when the rod 710 engages the locking mechanism 730 the nozzle 400 is "unlocked" and may move independently of the transcowl 400. FIG. 8 particularly shows the nozzle 400 in an extended position, which generally corresponds to the position shown in FIG. 5.

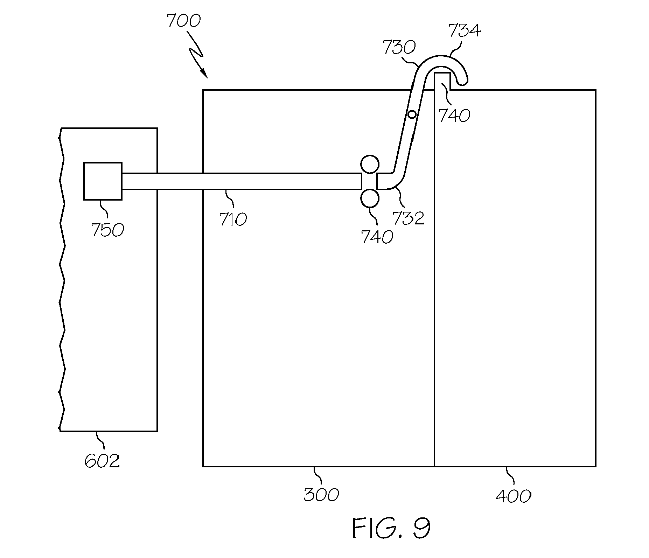

However, as noted above, the engagement of the rod 710 and locking mechanism 730 is dependent upon the position of the transcowl 300. FIG. 9 shows the transcowl 300 in a deployed position, such as that discussed above in reference to FIG. 4. In such a position, the transcowl 300 is translated away from the torque box 602. Since the rod 710 is fixed to the torque box 602, the transcowl 300 also translates relative to the rod 710 along the roller bearings 740. Relative to the transcowl 300, the rod 710 appears to retract.

As the transcowl 300 translates, the locking mechanism 730 is also moved away from the rod 710. As the locking mechanism 730 disengages (or otherwise moves away) from the rod 710, the torsion spring 720 pivots the locking mechanism 730. In the views between FIG. 7 and FIG. 9, the locking mechanism 730 is pivoted in a clockwise direction by the torsion spring 720. As the locking mechanism 730 pivots, the second end 734 engages the catch structure 760. In one exemplary embodiment, the second end 734 is a hook that secures the catch structure 740 from movement away from the transcowl 300, although other arrangements may be provided.

Upon engagement of the second end 734 of the locking mechanism 740 and the catch structure 760, the nozzle 400 is fixed relative to the transcowl 300. As such, in one exemplary embodiment, the nozzle 400 is locked when the transcowl 300 is in the deployed position, such as that shown in FIG. 9.

As the transcowl 300 transitions from a deployed position to a stowed positions (e.g., transitions from the position in FIG. 9 to the position of FIG. 7), the transcowl 300 translates back towards the torque box 602 such that the rod 710 engages the locking mechanism 730 to overcome the spring force of the torsion spring 720 and to pivot the locking mechanism 730 to release the catch structure 740. In other words, the torsion spring 720 has a spring force in a direction counter to the force of the rod 710. In the views between FIG. 9 and FIG. 7, the locking mechanism 730 is pivoted in a counter-clockwise direction by the rod 710.

During operation, the unlocking actuation may occur just as the drive coupling assembly 640 (FIG. 6) engages, thus allowing the nozzles 400 to be driven when the transcowls 300 are stowed (e.g., during take-off and cruise conditions). These embodiments eliminate the need for a synchronized locking device on each actuator, thereby reducing complexity and weight.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A case assembly (110) for an aircraft, comprising:
a thrust reverser actuation system (600) (TRAS) having a transcowl (300), the transcowl (300) having a stowed position and an deployed position;
a variable area fan nozzle (400) (VAFN) system (114) having a nozzle (400) selectively coupled to the transcowl (300); and
a nozzle locking assembly locking the nozzle (400) to the transcowl (300) in the deployed position and unlocking the nozzle (400) from the transcowl (300) in the stowed position.

2. The case assembly (110) of claim 1, wherein the nozzle locking assembly comprises
a rod (710) coupled to a fixed structure of the aircraft; and
a locking mechanism (730) mounted on the transcowl (300) and configured to, when the transcowl (300) is in the stowed position, engage the rod (710) to unlock the nozzle locking mechanism (730) and to, when the transcowl (300) is in the deployed position, disengage from the rod (710) to lock the nozzle locking mechanism (730).

3. The case assembly (110) of claim 2, wherein the locking mechanism (730) is mounted on the transcowl (300) with a torsion spring (720) with a spring force counter to the rod (710).

4. The case assembly (110) of claim 3, wherein the locking mechanism (730) has a first end (732) and a second end (734), the first end (732) engaging the rod (710) in the stowed position and the second end (734) engaging the nozzle (400) in the deployed position.

5. The case assembly (110) of claim 4, wherein the locking mechanism (730) is pivotably mounted on the transcowl (300) with the torsion spring (720) such that, when the transcowl (300) is transitioning between the stowed position and the deployed position, the first end (732) of the locking mechanism (730) disengages from the rod (710) and the torsion spring (720) pivots the second end (734) of the towards the nozzle (400) to engage the nozzle (400).

6. The case assembly (110) of claim 5, wherein the locking mechanism (730) is pivotably mounted on the transcowl (300) with the torsion spring (720) such that, when the transcowl (300) is transitioning between the deployed position and the stowed position, the first end (732) of the locking mechanism (730) engages the rod (710) to overcome a force of the torsion spring (720) to pivot the second end (734) of the away from the nozzle (400).

7. The case assembly (110) of claim 3, wherein the nozzle locking mechanism (730) further comprises roller bearings (740) mounted on the transcowl (300) to guide the rod (710) relative to the transcowl (300).

8. The case assembly (110) of claim 3, wherein the nozzle locking mechanism (730) further comprises a catch structure (740) mounted on the nozzle (400) to engage the locking mechanism (730) in the second position.

9. The case assembly (110) of claim 2, further comprising a linear actuator (650) configured to transition the transcowl (300) between the stowed and extended positions.

10. The case assembly (110) of claim 9, wherein the linear actuator (650) is a ballscrew actuator.
